# EUROPÄISCHE PATENTSCHRIFT

(11) **EP 2 667 040 B1**
(45) Veröffentlichungstag und Bekanntmachung des Hinweises auf die Patenterteilung: **04.05.2016**
(21) Anmeldenummer: 13168308.8
(22) Anmeldetag: 17.05.2013
(51) Int. Cl.: F15B 15/06, B25J 9/14

(54) **HANDHABUNGSEINHEIT ZUM UMPOSITIONIEREN VON TEILEN**
HANDLING UNIT FOR THE POSITIONING OF COMPONENTS
UNITÉ DE MANIPULATION POUR LE POSITIONNEMENT DE PIÈCES

(30) Priorität: 21.05.2012 DE 102012208475
(43) Veröffentlichungstag der Anmeldung: 27.11.2013
(73) Patentinhaber: Schunk GmbH & Co. KG Spann- und Greiftechnik, 74348 Lauffen am Neckar (DE)
(72) Erfinder: Geith, Georg, 82418 Murnau (DE)
(74) Vertreter: DREISS Patentanwälte PartG mbB

(56) Entgegenhaltungen:
- DE-A1- 2 821 635
- DE-U1-202005 013 799
- JP-U- S 636 203

## Beschreibung

Die Erfindung betrifft eine Handhabungseinheit zum Umpositionieren von Teilen, wobei die Teile entlang einer Bewegungsbahn bewegt werden können, die sich aus der Überlagerung einer Längsbewegung und einer Bewegung entlang einer Kreisbahn ergibt.

Eine derartige Handhabungseinheit ist beispielsweise aus der DE 20 2005 013 799 U1 vorbekannt. Bei dieser Handhabungseinheit ist ein einziger Elektromotor als Antrieb vorgesehen, der das Teil sowohl zu einer Drehbewegung als auch zu einer Linearbewegung antreibt.

Aus der DE 2010 029 809 B4 ist eine Handhabungseinheit bekannt geworden, die zwei Antriebe aufweist, wobei hier die zu bewegenden Teile zum einen in horizontale und zum anderen in vertikale Richtung bewegt werden können, nicht aber entlang einer Kreisbahn.

Der vorliegenden Erfindung liegt die Aufgabe zugrunde, eine Handhabungseinheit vorzuschlagen, in der Teile entlang einer Bewegungsbahn bewegt werden können, die sich aus einer Überlagerung einer Bewegung in Längsrichtung und einer Bewegung entlang einer Kreisbahn ergibt.

Diese Aufgabe wird durch eine Handhabungseinheit mit den Merkmalen des Anspruchs 1 gelöst. Die Handhabungseinheit sieht folglich einen ersten Antrieb zur Realisierung einer Bewegung in Längsrichtung und einen zweiten Antrieb zur Realisierung einer Bewegung entlang einer Kreisbahn vor. Die beiden Antriebe sind dabei vorzugsweise unabhängig voneinander ansteuerbar. Der erste Antrieb weist dabei eine in einem Gehäuse in Längsrichtung fest und um ihre Längsachse drehbar angeordnete, einen Längsantriebskolben aufweisende Kolbenstange und einen gegenüber dem Längsantriebskolben in Längsrichtung verlagerbaren, mit dem Kolben wenigstens einen Druckraum begrenzenden Hohlzylinder auf. Der Längsantriebskolben ist dabei gegenüber dem Hohlzylinder drehgesichert angeordnet. Am Hohlzylinder selbst ist ein Handhabungsarm anordenbar, mit dem dann die Teile umpositioniert werden können. Der Handhabungsarm ist dabei derart, dass aufgrund einer Längsbewegung des Hohlzylinders der Handhabungsarm in Längsrichtung bewegbar ist. Ferner ist vorgesehen, dass die Kolbenstange mit einem zweiten Antrieb zur Verdrehung der Kolbenstange samt Hohlzylinder drehgekoppelt ist, so dass aufgrund einer Drehbewegung der Kolbenstange der Handhabungsarm auf einen Kreisbogen bewegbar ist. Mit dem ersten Antrieb kann folglich der Handhabungsarm in Längsrichtung, vorzugsweise in vertikaler Richtung bewegt werden. Mit dem zweiten Antrieb kann der Handhabungsarm entlang einer Kreisbahn, und zwar insbesondere um die Achse des Längsantriebskolben verdreht werden. Beide Antriebe sind, wie bereits erwähnt, vorzugsweise unabhängig voneinander ansteuerbar, so dass entsprechende Beschleunigungen in Längsrichtung und entlang der Kreisbahn realisiert werden können. Dadurch, dass der Längsantriebskolben gegenüber dem Hohlzylinder drehgesichert angeordnet ist, können entlang der Kreisbahn wirkende Kräfte, die zu einem Drehmoment führen, aufgebracht werden, beziehungsweise über den Handhabungsarm auf den Hohlzylinder und vom Hohlzylinder über den Längsantriebskolben auf die Kolbenstange und letztlich in das Gehäuse abgeleitet werden. Insgesamt kann hierdurch die Handhabungseinheit vergleichsweise klein bauen und dennoch können sicher Kräfte, insbesondere Drehmomente, übertragen werden.

Dabei ist vorteilhaft, wenn der Längsantriebskolben einen ovalen oder elliptischen Wirkquerschnitt zur Drehsicherung des Längsantriebskolben gegenüber dem Hohlzylinder aufweist. Durch diese Ausgestaltung des Längsantriebskolbens wird eine Verdrehbewegung des Kolbens innerhalb des Hohlzylinders unterbunden. Der Längsantriebskolben ist folglich gegenüber dem Hohlzylinder drehgesichert. Grundsätzlich ist gemäß der Erfindung auch denkbar, dass der Längsantriebskolben einen von einem runden Wirkquerschnitt abweichenden Querschnitt aufweist, so dass eine Verdrehung des Längsantriebskolbens innerhalb des Hohlzylinders nicht stattfinden kann. Zudem ist denkbar, dass im Kolben oder im Zylinder Führungsnute beziehungsweise Führungsstege oder andere Geometrien vorgesehen sind, die ebenfalls eine Drehbewegung des Kolbens im Zylinder unterbinden.

Gemäß einer weiteren vorteilhaften Ausgestaltung der Erfindung ist vorgesehen, dass der zweite Antrieb wenigstens einen quer zur Längsachse der Kolbenstange angeordneten, mit der Kolbenstange drehgekoppelten und einen Druckraum begrenzenden Drehantriebskolben aufweist. Vorzugsweise sind zwei parallel nebeneinander angeordnete Drehantriebskolben vorgesehen, die Zahnstangenabschnitte aufweisen, die ein an der Kolbenstange vorgesehenes Ritzel zur Drehkopplung kämmen. Auf diese Art und Weise ist ein funktionssicherer Drehantrieb der Kolbenstange realisierbar.

Ferner ist vorteilhaft, wenn die Einrichtung eine Steuer- und Regeleinrichtung zur Ansteuerung und Regelung der beiden Antriebe vorsieht. Insbesondere können dabei auch Positionssensoren Verwendung finden, die der Steuer- und Regeleinheit die jeweilige Position, insbesondere des Handhabungsarms detektieren. Dadurch kann dann eine rechtzeitige Ansteuerung der jeweiligen Antriebe erfolgen.

Ferner ist vorteilhaft, wenn wenigstens ein eine Führungskulisse aufweisender Kulissenabschnitt und ein in die Führungskulisse eingreifender kolbenstangenseitiger Kulissenfolger zur Bewegungsführung des Hohlzylinders, und damit des Handhabungsarms vorgesehen sind. Die Kulissenführung liegt dabei vorzugsweise auf einem Kreiszylinder. In Längsrichtung des Kreiszylinders kann folglich die Längsbewegung der zu umzupositionierenden Teile erreicht werden. In quer zur Längsrichtung verlaufende Abschnitte der Führungskulisse bewegen sich dann die umzupositionierenden Teile entlang der Kreisbahn. Das Vorsehen einer Führungskulisse und eines Kulissenfolgers hat den Vorteil, dass eine genaue Bewegungsbahn vorgegeben werden kann. Zudem können aufgrund der Vorgabe der genauen Bewegungsbahn die beiden Antriebe so rechtzeitig angesteuert werden, dass die jeweiligen Druckräume bereits druckbeaufschlagt sind, bevor eine Bewegung entlang der jeweiligen Richtung möglich ist. Insofern ergibt sich hier eine Art Vorspannung, die zu einer raschen Beschleunigung der Bewegung führt, wenn der Kulissenfolger die Bewegung in die jeweilige Richtung freigibt.

Vorteilhaft ist, wenn zwei Kulissenabschnitte mit jeweils einer Führungskulisse vorgesehen sind, wobei die Achse der einen Führungskulisse in die Achse der anderen Führungskulisse derart übergeht, dass der Abstand der beiden Kulissenabstände verstellbar ist. Dadurch wird erreicht, dass aufgrund der Verstellung die Endlagen der Umpositionierbewegung verstellt werden können. Die Achse der einen Führungskulisse geht insbesondere in quer zur Längsrichtung verlaufender Querrichtung in die Achse der anderen Führungskulisse über. Dies hat den Vorteil, dass in diesem Bereich dann kein Versatz im Übergangsbereich von der einen Führungskulisse zur anderen Führungskulisse vorliegt. Der Kulissenfolger kann folglich von der einen Führungskulisse in die andere Führungskulisse problemlos überführt werden.

Zur Verstellung der beiden Kulissenabschnitte ist denkbar, dass ein verdrehbarer Exzenter Verwendung findet. Beispielsweise kann eine Exzenterschraube vorgesehen sein, die derart angeordnet ist, dass bei Verdrehung der Schraube der eine Kulissenabschnitt zunächst weg vom anderen Kulissenabschnitt und dann beim Weiterdrehen der Schraube wieder hin zum anderen Kulissenabschnitt bewegt wird. Durch den Exzenter kann die jeweilige Endlage des Kulissenabschnitts zumindest bedingt vorgegeben werden.

Ferner ist denkbar, dass am Hohlzylinder in Längsrichtung verstellbare Anschlagmittel zur Begrenzung der Bewegung in Längsrichtung vorgesehen sind. Die Anschlagmittel können insbesondere Stoßdämpfer sein, die die Bewegung vor Erreichen des Endanschlags abdämpfen.

Dabei ist denkbar, dass die Anschlagmittel gegen die Oberkante des wenigstens einen Kulissenabschnitts wirken. Dies ist insbesondere dann von Vorteil, wenn die Endlagen dann erreicht werden, wenn der Handhabungsarm sich lediglich in Längsrichtung bewegt.

Vorteilhaft ist dabei, wenn zwei Anschlagmittel derart vorgesehen sind, dass ein Anschlagmittel in der einen Bewegungsendlage gegen die Oberkante des wenigstens einen Kulissenabschnitts und das andere Anschlagmittel in die andere Bewegungsendlage gegen ebenfalls die Oberkante des wenigstens einen Kulissenabschnitts wirkt. Bei Vorsehen von zwei Kulissenabschnitten wirkt dann in der anderen Bewegungsendlage die Oberkante des vorzugsweise anderen Kulissenabschnitts gegen das Anschlagmittel.

Weitere Einzelheiten und vorteilhafte Ausgestaltungen der Erfindung sind der nachfolgenden Beschreibung zu entnehmen, anhand derer ein Ausführungsbeispiel der Erfindung näher beschrieben und erläutert ist.

Es zeigen:
- Figur 1: eine perspektivische Ansicht einer erfindungsgemäßen Handhabungseinheit;
- Figur 2: eine weitere perspektivische Ansicht der Handhabungseinheit gemäß Figur 1, im Teillängsschnitt;
- Figur 3: die Vorderansicht der Handhabungseinheit gemäß Figur 1;
- Figur 4: die Seitenansicht der Handhabungseinheit gemäß Figur 1;
- Figur 5: einen Längsschnitt durch die Handhabungseinheit gemäß Figur 1;
- Figur 6: einen Querschnitt durch die Handhabungseinheit entlang der Linie VI in Figur 5 und
- Figur 7: einen Schnitt entlang der Linie VII in Figur 5.

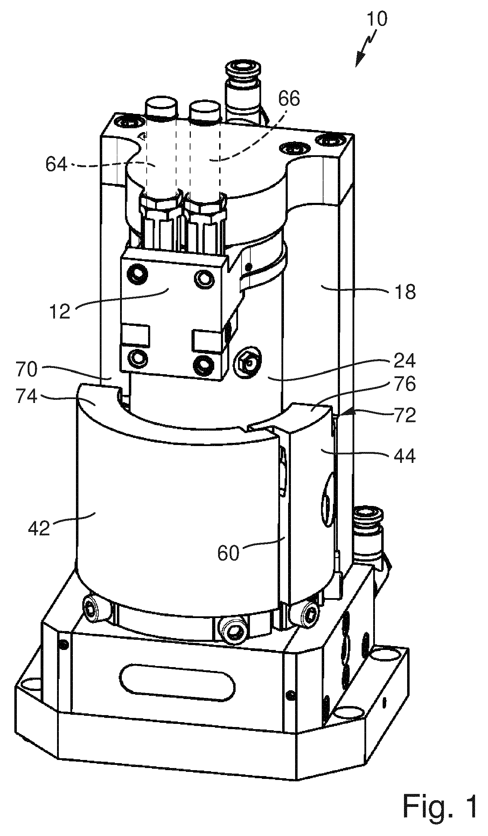

In den Figuren ist eine Handhabungseinheit 10 zum Umpositionieren von Teilen dargestellt. Dazu wird an eine in der Figur 1 deutlich zu erkennende Flanschplatte 12 ein nicht dargestellter Handhabungsarm befestigt, mit dem letztlich die umzupositionierenden Teile gehandhabt werden können.

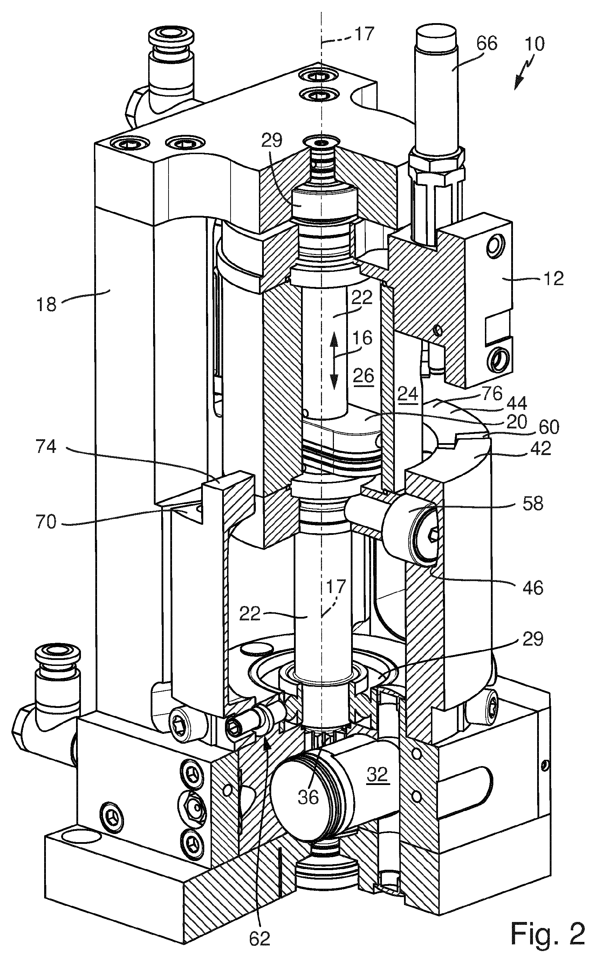

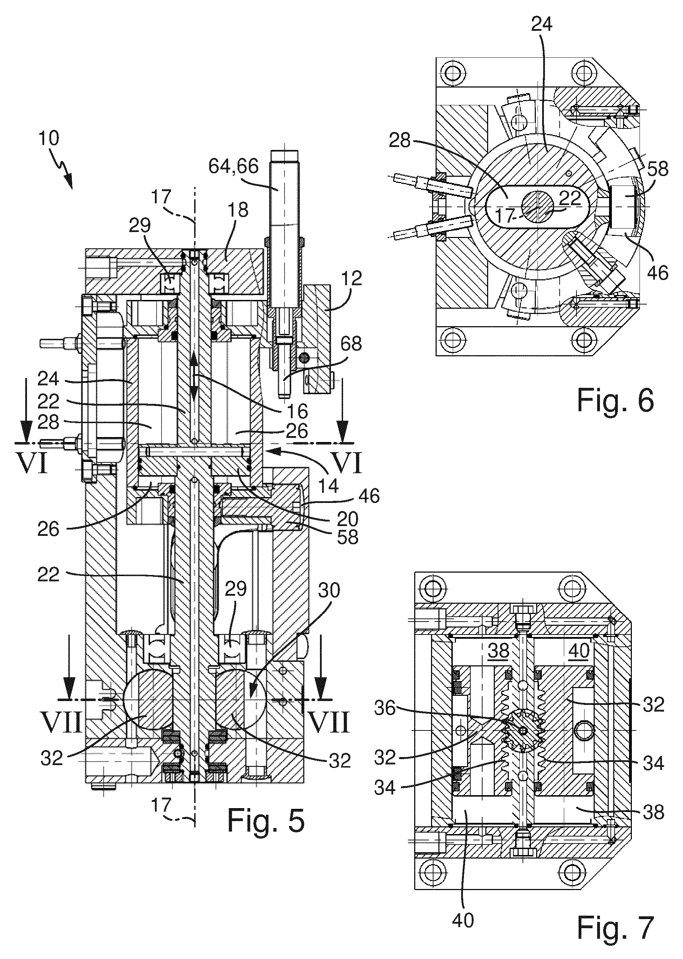

Wie aus der Darstellung aus Figur 2 und dem Schnitt gemäß Figur 5 deutlich wird, weist die Handhabungseinheit 10 einen ersten Antrieb 14 zur Realisierung einer Bewegung des Handhabungsarms in Längsrichtung, die mit dem Pfeil 16 angedeutet ist, auf. Der erste Antrieb 14 weist dabei eine in einem Gehäuse 18 in Längsrichtung 16 fest und um ihre Längsachse 17 drehbar, einen Längsantriebskolben 20 aufweisende Kolbenstange 22 auf. Die Kolbenstange 22 ist in einem Hohlzylinder 24 untergebracht, der mit dem Längsantriebskolben einen Druckraum 26 begrenzt. Wie aus Figur 2 und aus Figur 6 deutlich wird, weist der Längsantriebskolben 20 einen ovalen Wirkquerschnitt auf. Der Hohlzylinder 24 weist einen entsprechend oval ausgebildeten Zylinderraum 28 auf. Dadurch, dass der Längsantriebskolben 20 oval ausgebildet ist und auch dadurch, dass der Hohlzylinder 24 einen entsprechend ausgebildeten ovalen Zylinderraum 28 vorsieht, ist der Längsantriebskolben 20 gegenüber dem Hohlzylinder 24 drehgesichert. Eine Verdrehung des Kolbens 20 gegenüber dem Hohlzylinder 24 ist folglich nicht möglich.

Aus Figur 2 und Figur 5 wird ebenfalls deutlich, dass die Flanschplatte 12, an der der Handhabungsarm anordenbar ist, fest am Hohlzylinder 24 angebracht ist. Bei Druckbeaufschlagen einer der beiden Druckräume 26 wird folglich der Hohlzylinder 24 in Längsrichtung 16 bewegt. Da der Flansch 12 fest am Hohlzylinder 24 angeordnet ist, wird der Flansch 12 mit in Längsrichtung bewegt.

Wie ebenfalls aus Figur 2 und Figur 5 deutlich wird, ist im Gehäuse 18 ein zweiter Antrieb 30 untergebracht. Der zweite Antrieb 30 dient zur Verdrehung der Kolbenstange 22, und damit zur Verdrehung der Flanschplatte 12 und des Handhabungsarms entlang einer um die Längsachse 17 der Kolbenstange 22 verlaufenden Kreisbahn. Der zweite Antrieb 30 weist zwei quer zur Längsachse 17 der Kolbenstange 22 angeordnete, mit der Kolbenstange 22 drehgekoppelte Drehantriebskolben 32 auf, die insbesondere in Figur 7 deutlich zu erkennen sind. Die Drehantriebskolben 32 weisen auf den einander zugewandten Längsseiten Zahnstangenabschnitte 34 auf, die ein an der Kolbenstange 22 vorhandenes Ritzel 36 zur Drehkopplung mit der Kolbenstange 22 kämmen. Die beiden Drehantriebskolben 32 begrenzen Druckräume 38, 40, die wechselseitig druckbeaufschlagbar, je nachdem in welche Richtung die Kolbenstange 22 verdreht werden soll. Zur drehbaren Lagerung der Kolbenstange 22 im Gehäuse sind in Figur 5 deutlich zu erkennende Kugellager 29 vorgesehen.

Dadurch, dass die Kolbenstange 22 mit dem Hohlzylinder 24, und damit mit der Flanschplatte 12, drehgekoppelt ist, führt ein vom zweiten Antrieb 30 eingeleitete Drehbewegung zu einer Verdrehung der Flanschplatte 12. Aufgrund der drehgesicherten Anordnung von Kolbenstange 22 beziehungsweise Kolben 20 und Hohlzylinder 24 können auch Drehmomente vom zweiten Antrieb 30 hin zur Flanschplatte 12, beziehungsweise zum Handhabungsarm, übertragen werden.

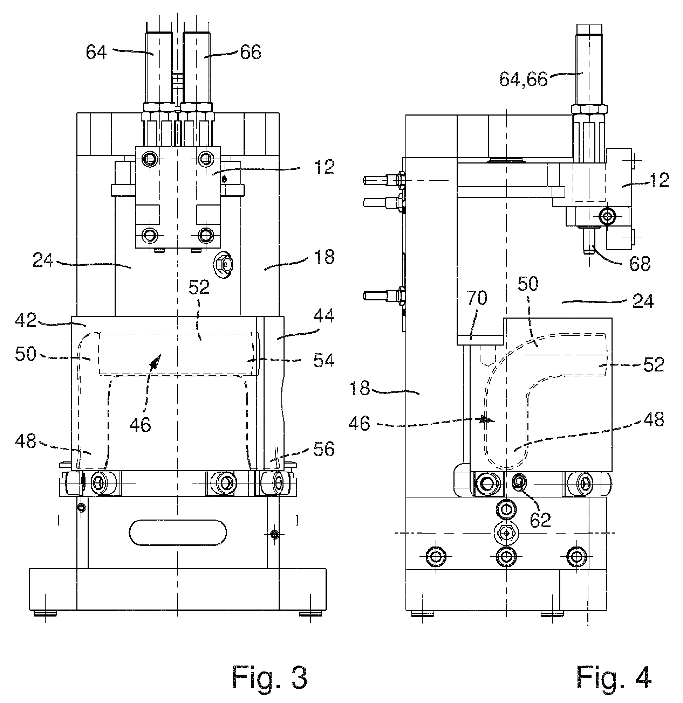

Zur Bewegungsführung der Flanschplatte 12, beziehungsweise des Hohlzylinders 24, sind am Gehäuse 18 insgesamt zwei ringabschnittsförmige Kulissenabschnitte 42, 44 vorgesehen, die auf der nach innen gewandten Seite eine Führungskulisse 46 aufweisen. Die Führungskulisse 46 ist insbesondere in Figur 3 und 4 deutlich zu erkennen. In der Ansicht gemäß Figur 3 wird deutlich, dass die Führungskulisse 46 einem auf dem Kopf stehenden "U" entspricht. Ausgehend von einer ersten Bewegungsendlage, die in Figur 3 mit dem Bezugszeichen 48 markiert ist, wird die Flanschplatte 12 zunächst in vertikaler Längsrichtung bewegt. Daran schließt sich ein Bogenabschnitt 50 an, der die Führungskulisse 46 in einen horizontal verlaufenden Abschnitt 52 überführt. Dieser Abschnitt 52 liegt auf einer um die Kolbenstange 22 verlaufenden Kreisbahn. An diesen Abschnitt 52 schließt sich ein weiterer Bogenabschnitt 54 an, der die Führungskulisse wieder in eine vertikale Längsrichtung überführt, an deren Ende die zweite Bewegungsendlage 56 liegt. Zur Bewegungsführung greift in die Führungskulisse 46 ein am Hohlzylinder 24 beziehungsweise an der Kolbenstange 22 angebrachter Kulissenfolger 58 in die Führungskulisse 46 ein.

Wie beispielsweise aus Figur 1 deutlich wird, ist zwischen den beiden Kulissenabschnitten 42 und 44 ein Spalt 60. Der Abstand zwischen den beiden Kulissenabschnitten 42 und 44 beziehungsweise die Größe des Spaltes 60, kann über eine Exzenterschraube 62 eingestellt werden. Dadurch kann letztlich die Länge des horizontal verlaufenden Kulissenabschnitts 52 eingestellt werden und folglich die Bewegungsendlagen 48 und 56 entsprechend verändert werden. Die Exzenterschraube 62 ist beispielsweise in Figur 2 gut zu erkennen. Die Exzenterschraube 62 ist im Gehäuse 18 drehbar gelagert. Bei Verdrehung der Exzenterschraube 62 wird der Kulissenabschnitt 42 um die Längsachse 17, beziehungsweise um die Kolbenstange 22 geringfügig verdreht.

Zur Bewegungsdämpfung in den Bewegungsendlagen 48, 56 sind an der Flanschplatte 12 zwei in Figur 1 und 3 deutlich erkennbare Stoßdämpfer 64, 66 vorgesehen. Die Stoßdämpfer 64, 66 erstrecken sich in Längsrichtung und weisen jeweils einen Anschlagstößel 68 auf. An den Oberkanten der beiden Kulissenabschnitte 42, 44 ist jeweils eine Anschlagschulter 74, 76 und eine sich daran anschließende Anschlagaussparung 70, 72 vorgesehen. Die Anschlagschultern 74 und 76 sowie die Anschlagaussparungen 70 und 72 sind dabei so ausgebildet, dass dann, wenn die erste Bewegungsendlage 48 erreicht wird, der Stoßdämpfer 66, beziehungsweise dessen Anschlagstößel 68, gegen die Anschlagschulter 74 wirkt. Der Stoßdämpfer 64 kommt hierbei nicht zum Einsatz; sein Anschlagstößel 68 befindet sich dann in der Anschlagaussparung 70. In der zweiten Bewegungsendlage 56 schlägt dann der Stoßdämpfer 64, beziehungsweise dessen Anschlagstößel 68, gegen die Schulter 76. Der andere Stoßdämpfer 66 kommt dann nicht zum Einsatz; sein Anschlagstößel 68 greift in die Anschlagaussparung 72 ein. Die beiden Stoßdämpfer 64, 66 sind in Längsrichtung verstellbar. Insofern kann durch Verstellung der Stoßdämpfer 64, 66 letztlich die exakte Bewegungsendlage in Längsrichtung vorgegeben werden.

Zur rechtzeitigen Ansteuerung der beiden Antriebe 14 und 30 sind vorzugsweise an der Führungskulisse 46 an entsprechend vorgesehenen Stellen Sensoren angebracht, die die jeweilige Lage des Kulissenfolgers 58 detektieren. Die Sensoren sind mit einer nicht dargestellten Steuer- und Regeleinheit verbunden, die dann eine Druckbeaufschlagung der jeweiligen Druckräume des ersten Antriebs 14 und des zweiten Antriebs 30 bewirken.

## Patentansprüche

1. Handhabungseinheit (10) zum Umpositionieren von Teilen, mit einem ersten Antrieb (14) zur Realisierung einer Bewegung in Längsrichtung (16) und einem zweiten Antrieb (30) zur Realisierung einer Bewegung entlang einer Kreisbahn, wobei der erste Antrieb (14) eine in einem Gehäuse (18) in Längsrichtung (16) fest und um ihre Längsachse (17) drehbar angeordnete, einen Längsantriebskolben (20) aufweisende Kolbenstange (22) und einen gegenüber dem Längsantriebskolben (20) in Längsrichtung verlagerbaren, mit dem Kolben (20) wenigstens einen Druckraum (26) begrenzenden Hohlzylinder (24) so aufweist, dass der Längsantriebskolben (20) gegenüber dem Hohlzylinder (24) drehgesichert angeordnet ist, wobei am Hohlzylinder (24) ein Handhabungsarm anordenbar ist, so dass aufgrund einer Längsbewegung des Hohlzylinders (24) der Handhabungsarm in Längsrichtung (16) bewegbar ist, und wobei die Kolbenstange (22) mit dem zweiten Antrieb (30) zur Verdrehung der Kolbenstange (22) samt Hohlzylinder (24) drehgekoppelt ist, so dass aufgrund einer Drehbewegung der Kolbenstange (22) der Handhabungsarm auf einem Kreisbogen bewegbar ist.

2. Handhabungseinheit (10) nach Anspruch 1, **dadurch gekennzeichnet, dass** der Längsantriebskolben (20) einen ovalen oder elliptischen Wirkquerschnitt zur Drehsicherung des Längsantriebskolben (20) gegenüber dem Hohlzylinder (24) aufweist.

3. Handhabungseinheit (10) nach Anspruch 1 oder 2, **dadurch gekennzeichnet, dass** der zweite Antrieb (30) wenigstens einen quer zur Längsachse (17) der Kolbenstange (22) angeordneten, mit der Kolbenstange (22) drehgekoppelten und einen Druckraum (38, 40) begrenzenden Drehantriebskolben (32) aufweist.

4. Handhabungseinheit (10) nach Anspruch 1, 2 oder 3, **dadurch gekennzeichnet, dass** eine Steuer- und Regeleinrichtung zur Ansteuerung und Regelung der beiden Antrieb (14, 30) vorgesehen ist.

5. Handhabungseinheit (10) nach einem der vorhergehenden Ansprüchen, **dadurch gekennzeichnet, dass** wenigstens ein eine Führungskulisse (46) aufweisender Kulissenabschnitt (42, 44) und ein in die Führungskulisse (46) eingreifender kolbenstangenseitiger Kulissenfolger (58) zur Bewegungsführung des Hohlzylinders (24), und damit des Handhabungsarms, vorgesehen sind.

6. Handhabungseinheit (10) nach Anspruch 5, **dadurch gekennzeichnet, dass** zwei Kulissenabschnitte (42, 44) mit jeweils einer Führungskulisse (46) vorgesehen sind, wobei die Achse der einen Führungskulisse in die Achse der anderen Führungskulisse derart übergeht, dass der Abstand der beiden Kulissenabschnitte verstellbar ist.

7. Handhabungseinheit (10) nach Anspruch 6, **dadurch gekennzeichnet, dass** zur Verstellung verdrehbare Exzenter (62) Verwendung finden.

8. Handhabungseinheit (10) nach einem der vorhergehenden Ansprüche, **dadurch gekennzeichnet, dass** am Hohlzylinder (24) in Längsrichtung verstellbare Anschlagmittel (64, 66) zur Begrenzung der Bewegung in Längsrichtung (16) vorgesehen sind.

9. Handhabungseinheit (10) nach Anspruch 8, **dadurch gekennzeichnet, dass** die Anschlagmittel (64, 66) gegen die Oberkante des wenigstens einen Kulissenabschnitts (42, 44) wirken.

10. Handhabungseinheit (10) nach Anspruch 9, **dadurch gekennzeichnet, dass** das zwei Anschlagmittel (64, 66) derart vorgesehen sind, dass ein Anschlagmittel (66) in der einen Bewegungsendlage gegen die Oberkante des wenigstens einen Kulissenabschnitts (42, 44) und das andere Anschlagmittel (64) in der anderen Bewegungsendlage gegen ebenfalls die Oberkante des wenigstens einen Kulissenabschnitts (44, 42) wirkt.

11. Handhabungseinheit (10) nach Anspruch 10, **dadurch gekennzeichnet, dass** die Oberkante des wenigstens einen Kulissenabschnitts (42, 44) wenigstens eine Anschlagschulter (74, 76) für das wenigstens eine Anschlagmittel (64, 66) und eine Anschlagaussparung (70, 72) für das andere Anschlagmittel (66, 64) vorsieht.

## Claims

1. Handling unit (10) for repositioning of parts, with a first drive (14) for realizing a movement in the longitudinal direction (16) and a second drive (30) for realizing a movement along a circular path, wherein the first drive (14) comprises a piston rod (22) disposed in a housing (18) firmly in the longitudinal direction (16) and rotatably about its longitudinal axis (17) and comprising a longitudinal drive piston (20), and a hollow cylinder (24) movable relative to the longitudinal drive piston (20) in the longitudinal direction and delimiting at least one pressure chamber (26) with the piston (20) so that the longitudinal drive piston (20) is arranged secured against rotation relative to the hollow cylinder (24), wherein a handling arm can be arranged at the hollow cylinder (24) such that due to a longitudinal movement of the hollow cylinder (24) the handling arm is movable in the longitudinal direction (16) and wherein the piston rod (22) with the second drive (30) for rotating the piston rod (22) together with the hollow cylinder (24) is rotationally coupled so that due to a rotational movement of the piston rod (22) the handling arm is movable on a circular arc.

2. Handling unit (10) according to Claim 1, **characterized in that** the longitudinal drive piston (20) comprises an oval or elliptical effective cross-section for securing against rotation of the longitudinal drive piston (20) relative to the hollow cylinder (24).

3. Handling unit (10) according to Claim 1 or 2, **characterized in that** the second drive (30) comprises at least one rotary drive piston (32) arranged transversely to the longitudinal axis (17) of the piston rod (22), rotationally coupled to the piston rod (22) and delimiting a pressure chamber (38, 40).

4. Handling unit (10) according to Claim 1, 2 or 3, **characterized in that** a control device to drive and control the two drives (14, 30) is provided.

5. Handling unit (10) according to one of the preceding Claims, **characterized in that** at least one slot portion (42, 44) comprising a guide slot (46) and a piston-rod-side slot follower (58) engaging with the guide slot (46) to guide the movement of the hollow cylinder (24), and thus of the handling arm, are provided.

6. Handling unit (10) according to Claim 5, **characterized in that** two slot portions (42, 44) each having a guide slot (46) are provided, wherein the axis of one guide slot merges with the axis of the other guide slot such that the distance of the two slot portions is adjustable.

7. Handling unit (10) according to Claim 6, **characterized in that** eccentric members (62) rotatable for adjustment are used.

8. Handling unit (10) according to one of the preceding Claims, **characterized in that** longitudinally adjustable stopper means (64, 66) to limit the movement in the longitudinal direction (16) are provided on the hollow cylinder (24).

9. Handling unit (10) according to Claim 8, **characterized in that** the stopper means (64, 66) act against the top edge of the at least one slot portion (42, 44).

10. Handling unit (10) according to Claim 9, **characterized in that** the two stopper means (64, 66) are provided such that one stopper means (66), when in one end position, acts against the top edge of the at least one slot portion (42, 44) and the other stopper means (64), when in the other end position, likewise acts against the top edge of the at least one slot portion (44, 42).

11. Handling unit (10) according to Claim 10, **characterized in that** the top edge of the at least one slot portion (42, 44) is provided with at least one stopper shoulder (74, 76) for the at least one stopper means (64, 66) and one stopper notch (70, 72) for the other stopper means (66, 64).

## Revendications

1. Unité de manipulation (10) permettant le repositionnement de pièces, comprenant un premier entraînement (14) permettant de réaliser un déplacement dans la direction longitudinale (16) et un deuxième entraînement (30) permettant de réaliser un déplacement le long d'une trajectoire circulaire, le premier entraînement (14) comprenant une tige de piston (22), laquelle est montée fixe dans un boîtier (18) dans la direction longitudinale (16) et de manière à pouvoir tourner autour de son axe longitudinal (17) et comporte un piston d'entraînement longitudinal (20), et un cylindre creux (24) mobile par rapport au piston d'entraînement longitudinal (20) dans la direction longitudinale et délimitant avec le piston (20) au moins une chambre de pression (26), de sorte que le piston d'entraînement longitudinal (20) est monté bloqué en rotation par rapport au cylindre creux (24), un bras de manipulation pouvant être disposé sur le cylindre creux (24), de sorte que du fait d'un déplacement longitudinal du cylindre creux (24), le bras de manipulation est mobile dans la direction longitudinale (16), et la tige de piston (22) étant accouplée en rotation au deuxième entraînement (30) pour amener en rotation la tige de piston (22) et le cylindre creux (24), de sorte que du fait d'un mouvement en rotation de la tige de piston (22), le bras de manipulation est mobile sur une trajectoire circulaire.

2. Unité de manipulation (10) selon la revendication 1, **caractérisée en ce que** le piston d'entraînement longitudinal (20) présente une section transversale active ovale ou elliptique pour le blocage de la rotation du piston d'entraînement longitudinal (20) par rapport au cylindre creux (24).

3. Unité de manipulation (10) selon la revendication 1 ou 2, **caractérisée en ce que** le deuxième entraînement (30) comprend au moins un piston d'entraînement rotatif (32) disposé transversalement à l'axe longitudinal (17) de la tige de piston (22), accouplé en rotation à la tige de piston (22) et délimitant une chambre de pression (38, 40).

4. Unité de manipulation (10) selon la revendication 1, 2 ou 3, **caractérisée en ce qu'**un dispositif de commande et de régulation permettant la commande et la régulation des deux entraînements (14, 30) est prévu.

5. Unité de manipulation (10) selon l'une quelconque des revendications précédentes, **caractérisée en ce qu'**au moins une section de coulisse (42, 44) comprenant une coulisse de guidage (46) et un suiveur de coulisse (58) côté tige de piston s'insérant dans la coulisse de guidage (46) et permettant de guider le déplacement du cylindre creux (24), et donc du bras de manipulation, sont prévus.

6. Unité de manipulation (10) selon la revendication 5, **caractérisée en ce que** deux sections de coulisse (42, 44) comprenant chacune une coulisse de guidage (46) sont prévues, l'axe de l'une des coulisses de guidage se prolongeant dans l'axe de l'autre coulisse de guidage, de telle sorte que l'écart entre les deux sections de coulisse est réglable.

7. Unité de manipulation (10) selon la revendication 6, **caractérisée en ce que** des excentriques rotatifs (62) sont utilisés pour le réglage.

8. Unité de manipulation (10) selon l'une quelconque des revendications précédentes, **caractérisée en ce que** des moyens de butée (64, 66) mobiles dans la direction longitudinale sur le cylindre creux (24) et destinés à limiter le déplacement dans la direction longitudinale (16) sont prévus.

9. Unité de manipulation (10) selon la revendication 8, **caractérisée en ce que** les moyens de butée (64, 66) agissent contre le bord supérieur de la ou des sections de coulisse (42, 44).

10. Unité de manipulation (10) selon la revendication 9, **caractérisée en ce que** deux moyens de butée (64, 66) sont prévus de telle manière qu'un moyen de butée (66) agit dans l'une des positions finales de déplacement contre le bord supérieur de la ou des sections de coulisse (42, 44) et l'autre moyen de butée (64) agit dans l'autre position finale de déplacement également contre le bord supérieur de la ou des sections de coulisse (44, 42).

11. Unité de manipulation (10) selon la revendication 10, **caractérisée en ce que** le bord supérieur de la ou des sections de coulisse (42, 44) prévoit au moins un épaulement de butée (74, 76) pour le ou les moyens de butée (64, 66) et un évidement de butée (70, 72) pour l'autre moyen de butée (66, 64).
